# EUROPEAN PATENT APPLICATION

(11) **EP 3 378 632 A1**
(43) Date of publication of application: **26.09.2018**
(21) Application number: 16865964.7
(22) Date of filing: 13.07.2016
(51) Int. Cl.: B29C 67/00, B33Y 30/00

(54) **THREE-DIMENSIONAL SHAPING APPARATUS AND SHAPING MATERIAL DISCHARGING MEMBER**

(30) Priority: 20.11.2015 JP 2015227589; 16.06.2016 JP 2016120148
(71) Applicant: Ricoh Company, Ltd., Tokyo 143-8555 (JP)
(72) Inventor: TAKEYAMA, Yoshinobu, Tokyo 143-8555 (JP); AOKI, Daisuke, Tokyo 143-8555 (JP)
(74) Representative: J A Kemp
(86) International application number: PCT/JP2016/070714
(87) International publication number: WO 2017/085961

(57) **Abstract**

A three-dimensional modeling apparatus models a three-dimensional model with a modeling material discharged into a processing space by a discharging unit, using a modeling material discharging member. The modeling material discharging member includes an entrance 13b from which the modeling material, such as filament 40, is loaded, the discharging unit that discharges the modeling material, through holes 12a, 13a serving as a transport channel through which the modeling material loaded from the entrance 13b is transported to the discharging unit, and a head heating unit 12 that heats the modeling material in the transport channel. The modeling material discharging member includes a cooling unit 13 that is provided adjacently to the transport channel between the entrance 13b and the head heating unit 12. A coolant path is formed inside the cooling unit 13. The three-dimensional modeling apparatus further includes a coolant supplying unit that supplies coolant into the coolant path.

## Description

### Field

The present invention relates to a three-dimensional modeling apparatus and a modeling material discharging member.

### Background

Having been conventionally known is a three-dimensional modeling apparatus that models a three-dimensional object (three-dimensional model) having a desirable three-dimensional shape, with a modeling material discharged into a processing space, being discharged from a nozzle (discharging unit) of a modeling head (modeling material discharging member).

For example, Patent Literature 1 discloses a three-dimensional modeling apparatus that models a three-dimensional model using fused deposition modeling (FDM), in a production chamber (processing space) heated by a heater. This three-dimensional modeling apparatus extrudes a thermoplastic material (modeling material) that is heated inside an outlet nozzle (discharging unit) provided on an extrusion head (modeling material discharging member) that is positioned inside the production chamber. The extrusion head is then moved in two-dimensional directions along a horizontal surface while extruding the thermoplastic material, thereby sequentially depositing layers on a platform to form a model structure, and eventually modeling the three-dimensional model. This three-dimensional modeling apparatus is also provided with an air deflector that guides an airflow in the production chamber to the area of the outlet nozzle provided on the extrusion head, in order to cool the outlet nozzle.

### Summary

### Technical Problem

Generally, in a three-dimensional modeling apparatus in which a heating unit heats the modeling material being transported through a transport channel for transporting the modeling material to the discharging unit in the modeling material discharging member, it is desirable to prevent a heating range of a modeling material by the heating unit from extending upstream of a modeling material transport direction, from the viewpoint of the transportability of the modeling material.

### Solution to Problem

To solve the above-described problem, a three-dimensional modeling apparatus models a three-dimensional model with a modeling material discharged into a processing space by a discharging unit, using a modeling material discharging member. The modeling material discharging member includes: an entrance from which the modeling material is loaded; the discharging unit that discharges the modeling material; a transport channel through which the modeling material loaded from the entrance is transported to the discharging unit; and a heating unit that heats the modeling material in the transport channel. The modeling material discharging member includes a cooling unit that is provided adjacently to the transport channel between the entrance and the head heating unit. A coolant path is formed inside the cooling unit. The three-dimensional modeling apparatus further includes a coolant supplying unit that supplies coolant into the coolant path.

### Advantageous Effects of Invention

According to the present invention, it is possible to inhibit the heating range of the modeling material by the heating unit included in the modeling material discharging member from extending upstream of the modeling material transport direction, advantageously.

### Brief Description of Drawings

FIG. 1 is an explanatory diagram schematically illustrating a structure of a three-dimensional modeling apparatus according to an embodiment.
FIG. 2 is a perspective view illustrating an external view of a chamber provided inside the three-dimensional modeling apparatus.
FIG. 3 is a perspective view of the three-dimensional modeling apparatus, illustrated with the front part thereof cut off and removed.
FIG. 4 is a control block diagram of the three-dimensional modeling apparatus.
FIG. 5 is a perspective view schematically illustrating the tip portion of a modeling head included in the three-dimensional modeling apparatus.
FIG. 6 is a cross-sectional view of the modeling head across the part corresponding to one injection nozzle included in the modeling head.
FIG. 7 is a schematic for explaining an internal structure of a cooling unit provided inside the modeling head, in a view from the horizontal direction.
FIG. 8 is a schematic for explaining the internal structure of the cooling unit, in a top view from the vertical direction.
FIG. 9 is a diagram schematically illustrating a cooling mechanism of the cooling unit.
FIG. 10 is a diagram schematically illustrating a structure of a connection between a coolant inlet provided on the cooling unit, and a transfer tube.
FIG. 11 is a schematic for explaining an internal structure of a cooling unit according to a modification 1, in a view from the horizontal direction.
FIG. 12 is a schematic for explaining the internal structure of the cooling unit according to the modification 1, in a top view from the vertical direction.
FIG. 13 is a schematic for explaining an internal structure of a cooling unit according to a modification 2, in a view from the horizontal direction.
FIG. 14 is a schematic for explaining the internal structure of the cooling unit according to the modification 2, in a top view from the vertical direction.
FIG. 15 is a partial cross-sectional view of a modeling head corresponding to one injection nozzle according to a modification 3.
FIG. 16 is a perspective view of the cooling unit according to the modification 3, viewed from the bottom side thereof (from the side of the injection nozzles).
FIG. 17 is a perspective view of the cooling unit according to the modification 3, viewed from the top side thereof (from the opposite side of the injection nozzles).
FIG. 18 is a horizontal cross-sectional view of the cooling unit according to the modification 3, horizontally cut across the coolant paths.
FIG. 19 is a vertical cross-sectional view of the cooling unit according to the modification 3, vertically cut across the through holes.
FIG. 20 is a cross-sectional view of an exemplary modeling head in which two cooling units according to the modification 3 are stacked on top of each other.

### Description of Embodiments

An embodiment in which the present invention is applied to a three-dimensional modeling apparatus that models a three-dimensional model using fused deposition modeling (FDM) will now be explained.

The present invention is, however, not limited to the fused deposition modeling (FDM), and the present invention may be applied to any three-dimensional modeling apparatus that models a three-dimensional model using any other modeling technique, as long as the three-dimensional modeling apparatus models a three-dimensional model on a mounting surface of the mounting table using any modeling means that is positioned to face the mounting surface.

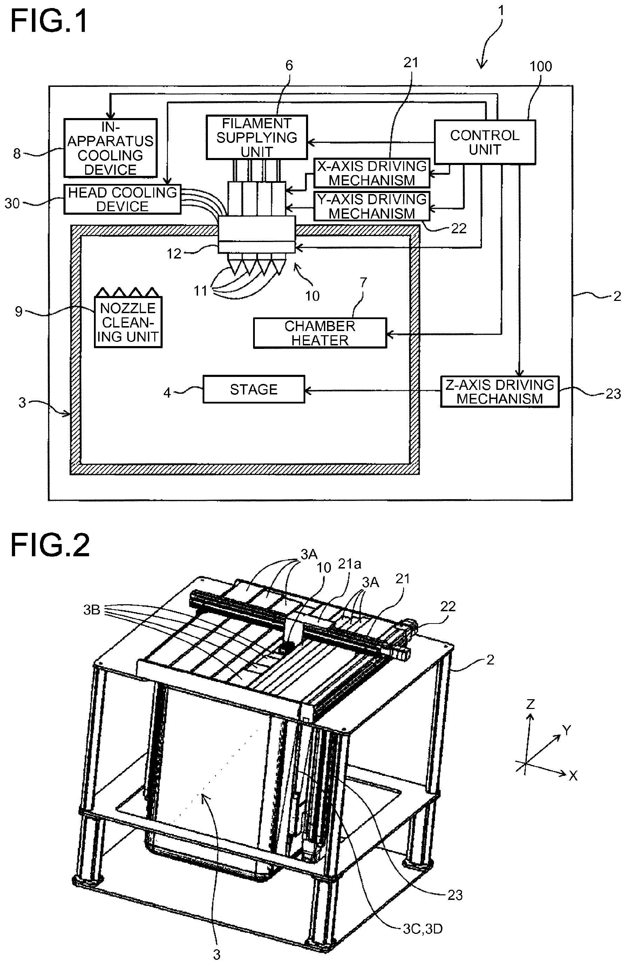

FIG. 1 is an explanatory diagram schematically illustrating a structure of a three-dimensional modeling apparatus 1 according to the embodiment.

FIG. 2 is a perspective view illustrating an external view of a chamber provided inside the three-dimensional modeling apparatus 1 according to the embodiment.

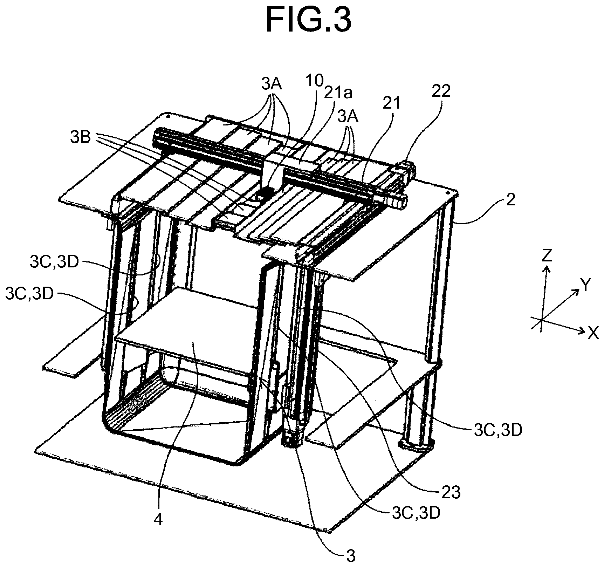

FIG. 3 is a perspective view of the three-dimensional modeling apparatus 1 according to the embodiment, illustrated with the front part thereof cut off and removed.

The three-dimensional modeling apparatus 1 includes a chamber 3 in a main body frame 2. The inside of the chamber 3 serves as a processing space in which a three-dimensional model is modeled. A stage 4 serving as a mounting table is provided inside the processing space, that is, inside the chamber 3. A three-dimensional model is modeled on the stage 4.

A modeling head 10 serving as a modeling material discharging member is provided above the stage 4 inside the chamber 3. Provided in a lower portion (to the tip of) the molding head 10 is injection nozzles 11 from which filament that is a modeling material is ejected. In this embodiment, the modeling head 10 is configured as one unit including four modeling heads 10. The injection nozzles 11 may be provided in any number. The modeling head 10 is also provided with a head heating unit 12 for heating the filament to be supplied into the injection nozzles 11.

The filament is a thin and elongated wire-like solid, and is set to the three-dimensional modeling apparatus 1 as a winding. A filament supplying unit 6 supplies the filament into each of the injection nozzles 11 provided to the modeling head 10. A different filament may be used correspondingly to each of the injection nozzles 11, or the same filament may be used. In this embodiment, a three-dimensional model is modeled by causing the head heating unit 12 to heat and fuse the filament supplied from the filament supplying unit 6, and causing a predetermined injection nozzle(s) 11 to eject the fused filament, in a manner to extrude the filament, thereby sequentially depositing layers on the stage 4 to form a three-dimensional model structure.

The modeling material ejected from the injection nozzles 11 on the modeling head 10 also contains a support material with which the three-dimensional model is not formed, in addition to the filament with which the three-dimensional model is formed. The support material is generally made of a different material from that of the filament for forming the three-dimensional model, and the support material is eventually removed from the three-dimensional model having been formed with the filament. This support material, too, is heated and fused by the head heating unit 12, and the fused support material is ejected from a predetermined injection nozzle 11 in a manner to be extruded, and is sequentially deposited into a layer structure.

An X-axis driving mechanism 21 extending in the apparatus right-and-left direction (the right-and-left direction in FIGS. 2 and 3 = X-axis direction) holds the modeling head 10 via a joint member 21a, in a movable manner in the longitudinal directions of the X-axis driving mechanism 21 (in the X-axis direction). With the driving force of the X-axis driving mechanism 21, the modeling head 10 can be moved in the apparatus right-and-left direction (X-axis direction). Because the modeling head 10 reaches a high temperature by being heated by the head heating unit 12, it is preferable for the joint member 21a to have a low heat-transfer property so that the heat is not easily transferred to the X-axis driving mechanism 21.

A Y-axis driving mechanism 22 extending in the apparatus front-and-back directions (front-and-back directions in FIGS. 2 and 3 = Y-axis direction) holds each end of the X-axis driving mechanism 21 in a manner to be slidable in the longitudinal directions of the Y-axis driving mechanism 22 (Y-axis direction). With the driving force of the Y-axis driving mechanism 22 moving the X-axis driving mechanism 21 in the Y-axis direction, the modeling head 10 can be moved in the Y-axis direction.

A Z-axis driving mechanism 23 fixed to the main body frame 2, and extending in the apparatus up-and-down directions (the up-and-down directions in FIGS. 2 and 3, i.e., Z-axis direction) holds the stage 4 in a manner to be movable in the longitudinal directions of the Z-axis driving mechanism 23 (Z-axis direction). With the driving force of the Z-axis driving mechanism 23, the stage 4 can be moved in the apparatus up-and-down directions (Z-axis direction).

In this embodiment, a chamber heater 7, serving as a processing space heating unit for heating the inside of the chamber 3, is provided inside the chamber 3 (processing space). Because, in this embodiment, fused deposition modeling (FDM) is used in modeling a three-dimensional model, it is preferable to keep the temperature of the inside of the chamber 3 at a target temperature while performing the modeling process. Therefore, in this embodiment, before the modeling process is started, a preheating process for raising the temperature in the chamber 3 to a target temperature (e.g., 200 degrees Celsius or so) is performed in advance. During the preheating process, the chamber heater 7 heats the inside of the chamber 3 to raise the temperature in the chamber 3 to a target temperature. The inside of the chamber 3 is also heated during the modeling process to maintain the temperature in the chamber 3 at the target temperature. The operation of the chamber heater 7 is controlled by a control unit 100.

The chamber 3 is made of a heat insulating material or from members provided with a heat insulating material, and has a structure for inhibiting the heat in the chamber 3 from radiating outside.

An object to be moved by the X-axis driving mechanism 21 and the Y-axis driving mechanism 22 is the modeling head 10. A part of the modeling head 10 (i.e., the tip portion of the modeling head 10 including the injection nozzles 11 and the head heating unit 12) is positioned inside the chamber 3. In this embodiment, the inside of the chamber 3 is kept insulated from the outside even when the modeling head 10 is moved in the X-axis direction. Specifically, the top surface of the chamber 3 has a structure in which a plurality of X-axis sliding heat-insulating members 3A that are elongated in the Y-axis direction are arranged side by side in the X-axis direction, as illustrated in FIGS. 2 and 3. The adjacent X-axis sliding heat-insulating members 3A can slide with respect to each other in the X-axis direction. In this manner, even when the X-axis driving mechanism 21 moves the modeling head 10 in the X-axis direction, the X-axis sliding heat-insulating members 3A slide in a manner to follow the movement of the modeling head 10 in the X-axis direction, so that the top surface of the chamber 3 always remains covered by the X-axis sliding heat-insulating members 3A.

On the top surface of the chamber 3 through which the modeling head 10 passes, a plurality of Y-axis sliding heat-insulating members 3B are arranged side by side in the Y-axis direction, as illustrated in FIGS. 2 and 3. The adjacent Y-axis sliding heat-insulating members 3B can slide with respect to each other in the Y-axis direction. In this manner, even when the Y-axis driving mechanism 22 moves the modeling head 10 on the X-axis driving mechanism 21 in the Y-axis direction, the Y-axis sliding heat-insulating members 3B slide in a manner to follow the movement of the modeling head 10 in the Y-axis direction, so that the top surface of the chamber 3 always remains covered by the Y-axis sliding heat-insulating members 3B.

An object to be moved by the Z-axis driving mechanism 23 is the stage 4. The object to be moved is positioned inside the chamber 3. In this embodiment, the inside of the chamber 3 is kept insulated from the outside even when the stage 4 is moved in the Z-axis direction. Specifically, the external walls of the chamber 3 have sliding holes 3C extending in the Z-axis direction and through which joints between the Z-axis driving mechanism 23 and the stage 4 passes, respectively, as illustrated in FIGS. 2 and 3. The sliding holes 3C are sealed with flexible sealing members 3D made of a heat insulating material. When the Z-axis driving mechanism 23 moves the stage 4 in the Z-axis direction, the joints between the Z-axis driving mechanism 23 and the stage 4 move along the respective sliding holes 3C in the Z-axis direction, while elastically deforming the flexible sealing members 3D. Therefore, the sliding holes 3C formed on the side surfaces of the chamber 3 always remain covered by the respective sealing members 3D.

In this embodiment, the three-dimensional modeling apparatus 1 further includes: an in-apparatus cooling device 8 for cooling the space outside of the chamber 3 but inside the three-dimensional modeling apparatus 1; a nozzle cleaning unit 9 for cleaning the injection nozzles 11 on the modeling head 10; and a head cooling device 30 for cooling the modeling head 10.

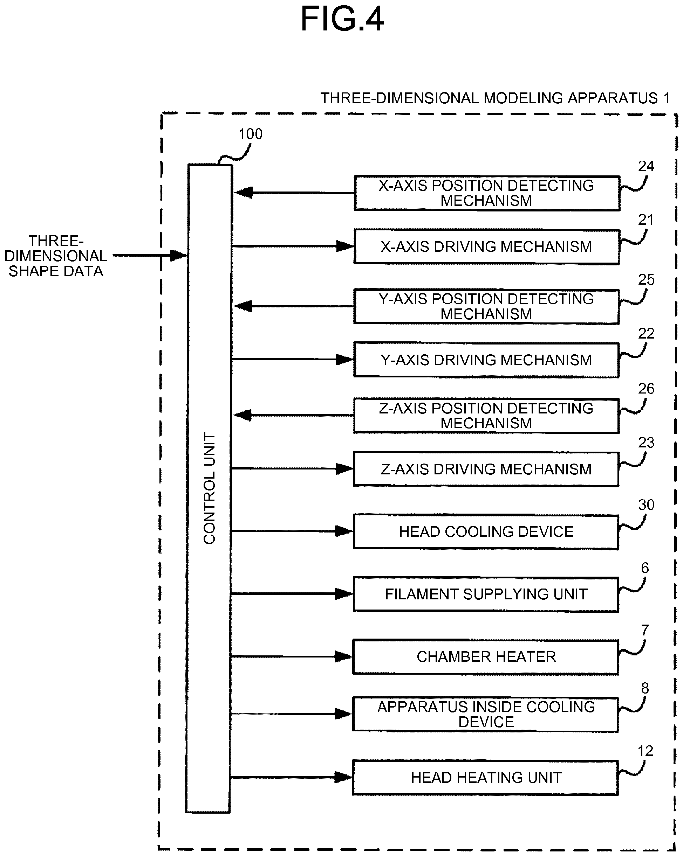

FIG. 4 is a control block diagram illustrating the three-dimensional modeling apparatus 1 according to the embodiment.

In this embodiment, the three-dimensional modeling apparatus 1 includes an X-axis position detecting mechanism 24 for detecting the position of the modeling head 10 in the X-axis direction. The detection result of the X-axis position detecting mechanism 24 is sent to the control unit 100. The control unit 100 moves the modeling head 10 to a target position in the X-axis direction, by controlling the X-axis driving mechanism 21 based on the detection result.

In this embodiment, the three-dimensional modeling apparatus 1 also includes a Y-axis position detecting mechanism 25 for detecting the position of the X-axis driving mechanism 21 in the Y-axis direction (the position of the modeling head 10 in the Y-axis direction). The detection result of the Y-axis position detecting mechanism 25 is sent to the control unit 100. The control unit 100 moves the modeling head 10 on the X-axis driving mechanism 21 to a target position in the Y-axis direction, by controlling the Y-axis driving mechanism 22 based on the detection result.

In this embodiment, the three-dimensional modeling apparatus 1 also includes a Z-axis position detecting mechanism 26 for detecting the position of the stage 4 in the Z-axis direction. The detection result of the Z-axis position detecting mechanism 26 is sent to the control unit 100. The control unit 100 moves the stage 4 to a target position in the Z-axis direction, by controlling the Z-axis driving mechanism 23 based on the detection result.

The control unit 100 can bring the three-dimensional relative position of the modeling head 10 with respect the position of the stage 4 to a target three-dimensional position in the chamber 3, by controlling the movements of the modeling head 10 and the stage 4.

A configuration and an operation of the modeling head 10 will now be explained in detail.

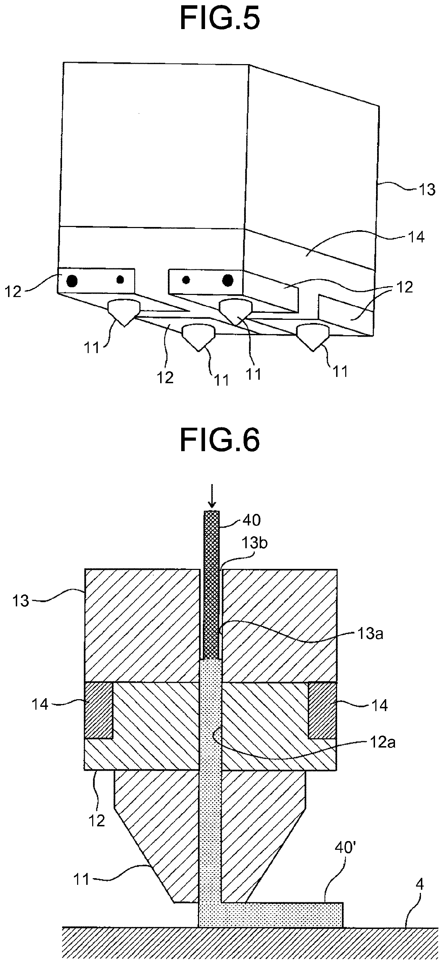

FIG. 5 is a perspective view schematically illustrating the tip portion of the modeling head 10 according to the embodiment. FIG. 6 is a cross-sectional view of the modeling head 10 across a part corresponding to one of the injection nozzles 11.

On the modeling head 10 according to the embodiment, four injection nozzles 11 are provided in an arrangement of two by two, as illustrated in FIG. 5. Note that the four injection nozzles 11 are illustrated to be arranged side by side in FIG. 1, for the convenience of explanation. The four injection nozzles 11 are covered (surrounded) by respective individual separate head heating units 12, and the control unit 100 can individually control the head heating units 12. In this manner, the filament 40 or the support material in each of the injection nozzles 11 can be heated individually by the corresponding head heating unit 12. Only the filament 40 will be explained in the explanation below.

The head heating units 12 are attached to a heat-insulating portion 14 that is made of a heat-insulating material, as illustrated in FIG. 5. The heat-insulating material of the heat-insulating portion 14 is also interposed between the head heating units 12. In this manner, the heat of the head heating unit 12 that is currently performing the heating process is inhibited from transferring to the other head heating units 12, and from heating the filament 40 in the injection nozzles 11 in the other head heating units 12.

The modeling head 10 includes a cooling unit 13 provided on the opposite side of the injection nozzles 11 with respect to the head heating units 12, that is, on the upstream side of the head heating unit 12 in the direction in which the filament 40 is transported. The cooling unit 13 has a shape of a single block made of a heat-absorbing material that is highly heat-conductive, such as aluminum, as illustrated in FIG. 5. The cooling unit 13 is shared among the four head heating units 12. However, it is also possible to provide four cooling units 13 for four head heating units 12, respectively.

On the end of the cooling unit 13 facing the opposite side of the head heating units 12, that is, on the upstream end of the cooling unit 13 in the direction in which the filament 40 is transported, entrances 13b for loading the filament 40 are provided correspondingly to the respective injection nozzles 11. Each of the head heating units 12 has a through hole 12a, and the cooling unit 13 has a corresponding through hole 13a. Each of the through holes 12a and the through holes 13b serves as a transport channel through which the filament 40 loaded from corresponding one of the entrances 13b is transported to the injection nozzle 11. Each of the head heating units 12 heats the filament 40 in the corresponding through hole 12a into a fused state. The fused filament 40' is transported into the injection nozzle 11.

At this time, the heat from the head heating unit 12 propagates not only to the filament 40 in the through hole 12a, but also to the filament upstream in the direction in which the filament 40 is transported. If a portion of the filament 40 away from the through hole 12a in the head heating unit 12 on the upstream side of the transport direction becomes heated and fused there, the portion of the filament solidifies when the head heating unit 12 ends or stops the heating process. Even when the head heating unit 12 then restarts the heating process, it takes time for the portion of the filament to become fused again. In such a case, the filament 40 supplied by the filament supplying unit 6 cannot be transported into the modeling head 10 and becomes clogged. Therefore, it is important to prevent a heating range of the filament 40 by the head heating unit 12 from extending upstream of the filament transport direction as much as possible, so that adhering filament can become fused again quickly after the head heating unit 12 starts the heating process again.

Therefore, in this embodiment, the cooling unit 13 is provided to the upstream side of the head heating unit 12 in the filament transport direction. The heat-absorbing material making up the cooling unit 13 is positioned adjacently to the through hole 13a through which the filament 40 passes, so that the cooling unit 13 absorbs the heat from and cools the filament 40 in the through hole 13a. In this manner, the cooling unit 13 inhibits the heating range of the modeling material by the head heating unit 12 from extending upstream in the modeling material transport direction.

To effectively restrict the upstream extension of the heating range of the filament 40 by the head heating unit 12, in the filament transport direction, the cooling unit 13 is required to have a high cooling effect. It may be considered that a cooling method used for the cooling unit 13 includes an air cooling system in which the cooling unit 13 is cooled by blowing the air against the cooling unit 13 from the outside; however, the air cooling system does not have a sufficient cooling effect. This is because, although the air cooling system can lower the temperature of the external surface of the cooling unit 13, the air cooling system is not quite capable of lowering the temperature in the cooling unit 13 adjacent to the through hole 13a through which the filament 40 passes, and of cooling the filament 40 in the through hole 13a, sufficiently.

Furthermore, in this embodiment, the inside of the chamber 3 is heated to a high temperature, and the head heating unit 12 included in the modeling head 10 needs to be entirely positioned inside the chamber 3. Therefore, the cooling unit 13, which is provided adjacently to the head heating unit 12 on the upstream side of the filament transport direction, is also positioned partly or entirely inside the highly heated chamber 3. In such a configuration, a sufficient cooling effect cannot be achieved even if blowing the highly heated air in the chamber 3 against the cooling unit 13, using the air cooling system.

It may also be considered that a cooling method used for the cooling unit 13 is a method of positioning a part of the cooling unit 13 (a part of the cooling unit 13 on the upstream side of the filament transport direction) outside the chamber 3, and cooling the part of the cooling unit 13 positioned outside of the chamber 3 with the air cooling system. However, in such a configuration too, the part cooled by the air cooling system is away from the part of the cooling unit 13 positioned near the head heating unit 12 (the downstream part of the cooling unit 13 in the filament transport direction). Therefore, it is difficult to cool the cooling unit 13 in such a manner to prevent the heating range of the filament 40 by the head heating unit 12 from extending upstream of the filament transport direction.

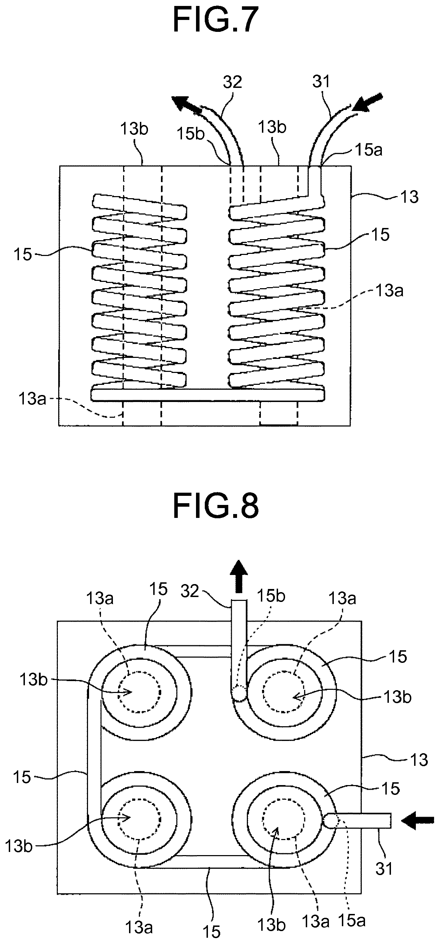

FIG. 7 is a schematic for explaining the internal structure of the cooling unit 13 according to the embodiment, viewed from the horizontal direction. FIG. 8 is a schematic for explaining the internal structure of the cooling unit 13 according to the embodiment, in a top view from the vertical direction.

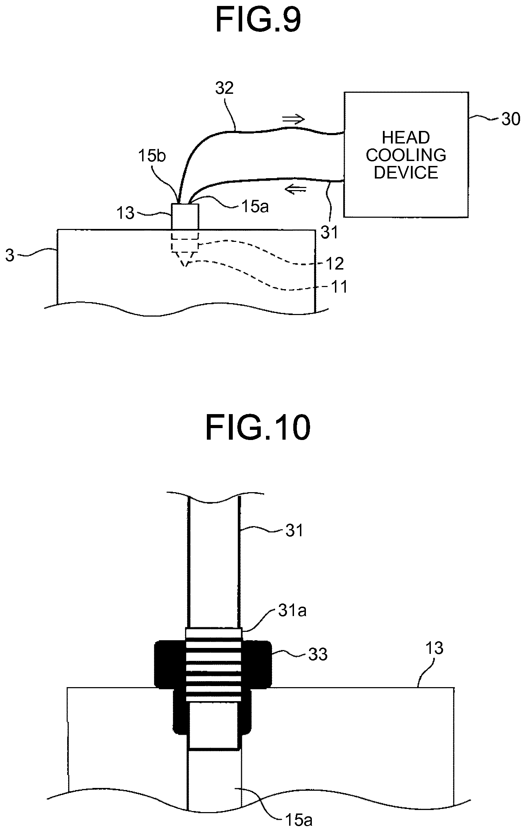

FIG. 9 is a diagram schematically illustrating a cooling mechanism of the cooling unit 13 according to the embodiment.

In the embodiment, as illustrated in FIGS. 7 and 8, a coolant path 15 is formed inside the cooling unit 13. A transfer tube 31 for conveying cooling water, serving as coolant sent out from the head cooling device 30 serving as a coolant supplying unit, is connected to a coolant inlet 15a of the coolant path 15. A return tube 32 for conveying the cooling water to be returned to the head cooling device 30 is connected to a coolant outlet 15b of the coolant path 15. The cooling water sent out from the head cooling device 30 passes through the transfer tube 31 and through the coolant inlet 15a, and flows into the coolant path 15 in the cooling unit 13. The cooling water then passes through the coolant path 15 and through the coolant outlet 15b, enters the return tube 32, and is returned to the head cooling device 30. The head cooling device 30 serves as a coolant circulating unit, and uses a coolant circulating technique in which the cooling water from the return tube 32 is cooled and sent out again via the transfer tube 31. However, the head cooling device 30 may use a technique in which the coolant is not circulated.

In this embodiment, the coolant path 15 is formed inside the cooling unit 13 in a manner to pass near the through hole 13a formed inside the cooling unit 13. Specifically, in this embodiment, as illustrated in FIG. 8, the coolant path 15 is formed in such a manner that the coolant path 15 goes around the periphery of the through hole 13a at least once. In this manner, a higher cooling efficiency can be achieved, because the heat of the filament 40 within the through holes 13a can be moved to the cooling water via the periphery of the through holes 13a. Furthermore, in this embodiment, as illustrated in FIG. 9, the coolant path 15 is provided to a major part of the cooling unit 13 in the filament transport direction, and therefore, the cooling water can remove the heat of the entire cooling unit 13, to enable a higher cooling efficiency to be achieved.

Furthermore, in this embodiment, a single coolant inlet 15a and a single coolant outlet 15b are shared among the coolant paths 15 that are positioned adjacently to the respective through holes 13a corresponding to the respective injection nozzles 11. As a possible configuration for sharing a single coolant inlet 15a and a single outlet 15b include an example in which the coolant paths 15 provided adjacently to the respective through holes 13a, which correspond to the respective injection nozzles 11, may be branched from the coolant inlet 15a, and merged at the coolant outlet 15b; however, in this embodiment, the coolant paths 15 that are positioned adjacently to the respective through holes 13a, which correspond to the respective injection nozzles 11, are formed as one coolant path.

Furthermore, in this embodiment, the modeling head 10 is moved by the X-axis driving mechanism 21 and the Y-axis driving mechanism 22. Therefore, it is preferable to use a flexible material, such as resin, for the transfer tube 31 and the return tube 32 that connect the head cooling device 30 to the inside of the cooling unit 13 on the modeling head 10, so that the movement of the modeling head 10 is not obstructed thereby. It is, however, difficult for the transfer tube 31 or the return tube 32 made of such a flexible material to have a high heat resistance in general. Therefore, it is preferable to avoid a configuration in which the transfer tube 31 and the return tube 32 are positioned inside the chamber 3 that is a high-temperature environment as is in the embodiment.

Therefore, in the embodiment, the cooling unit 13 is structured in such a manner that the coolant inlet 15a and the coolant outlet 15b of the coolant path 15 are positioned outside of the chamber 3, as illustrated in FIG. 9. More specifically, an upper portion of the cooling unit 13 (a part of the cooling unit 13 on the upstream side of the filament transport direction) is positioned outside the chamber 3, and the coolant inlet 15a and the coolant outlet 15b are positioned in the upper portion of the cooling unit 13. In this manner, the transfer tube 31 and the return tube 32 connected to the coolant inlet 15a and the coolant outlet 15b, respectively, do not required to have such a high heat resistance of a level capable of tolerating the high temperature environment in the chamber 3, so that these tubes can be made using a general flexible material.

FIG. 10 is a diagram schematically illustrating a structure of a connection between the coolant inlet 15a and the transfer tube 31. In this embodiment, as illustrated in FIG. 10, a coupler 33 is fitted into and fixed to the coolant inlet 15a of the cooling unit 13, and a screw portion attached to the tip 31a of the transfer tube 31 is attached to the threaded hole of the coupler 33. The structure is, however, not limited thereto.

In this embodiment, water is used as coolant supplied into the coolant path 15, but any other liquid or gas may be selected and used, as appropriate.

### Modification 1

A modification of the embodiment (hereinafter, the modification will be referred to as a "modification 1") will now be explained.

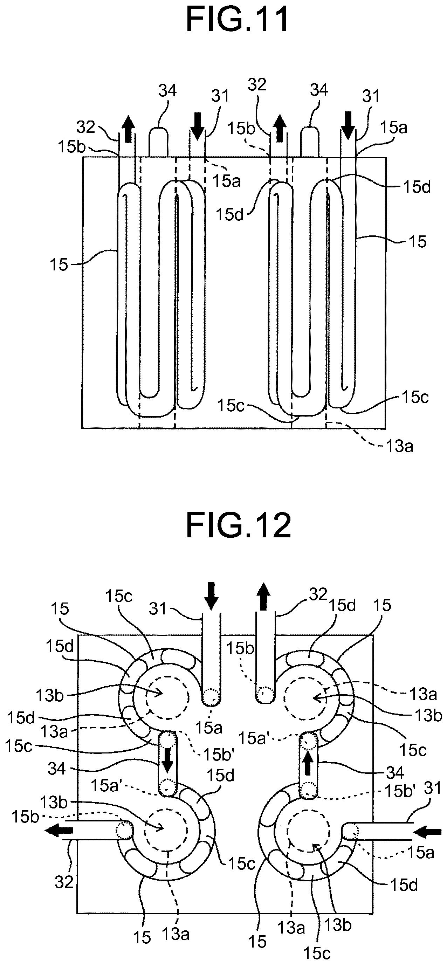

FIG. 11 is a schematic for explaining the internal structure of the cooling unit 13 according to the modification 1, viewed from the horizontal direction.

FIG. 12 is a schematic for explaining the internal structure of the cooling unit 13 according to the modification 1, in a top view from the vertical direction.

The coolant path 15 formed inside the cooling unit 13 in the embodiment described above has a spiral shape that is wound around the periphery of the through hole 13a corresponding to each of the injection nozzles 11, in a manner to surround the through hole 13a in the longitudinal direction (filament transport direction) of the through hole 13a. In the modification 1, the coolant path 15 is formed in a manner to surround the through holes 13a by meandering in the circumferential direction of the through hole 13a. Specifically, the coolant path 15 corresponding to each of the through holes 13a in the modification 1 meanders repeatedly along the circumferential direction of the through hole 13a, where the coolant path 15 extends downwardly from the inlet along the through hole 13a, folded upwardly at a lower turning point 15c and extends upwardly, and folded downwardly at an upper turning point 15d and extends downwardly, and is connected to the outlet that is at the upper end of the coolant path 15 extending upwardly.

In the modification 1, for two coolant paths 15 among the four coolant paths 15 corresponding to the respective through holes 13a, an outlet 15b' of one coolant path 15 is connected to an inlet 15a' of the other coolant path 15 via a connecting passageway 34, and these two coolant paths 15 share a single coolant inlet 15a that is connected to the transfer tube 31, and the single coolant outlet 15b that is connected to the return tube 32. In other words, the cooling unit 13 according to the modification 1 is connected with two transfer tubes 31 and two return tubes 32, and has two circulatory channels for circulating the cooling water.

According to the modification 1, the coolant paths 15 formed inside the cooling unit 13 can be formed more easily, compared with the spiral-shaped counterpart according to the embodiment described above, and the coolant paths 15 can be formed inside the cooling unit 13 using relatively easy processing.

### Modification 2

Another modification of embodiment (hereinafter, the modification will be referred to as a "modification 2") will now be explained.

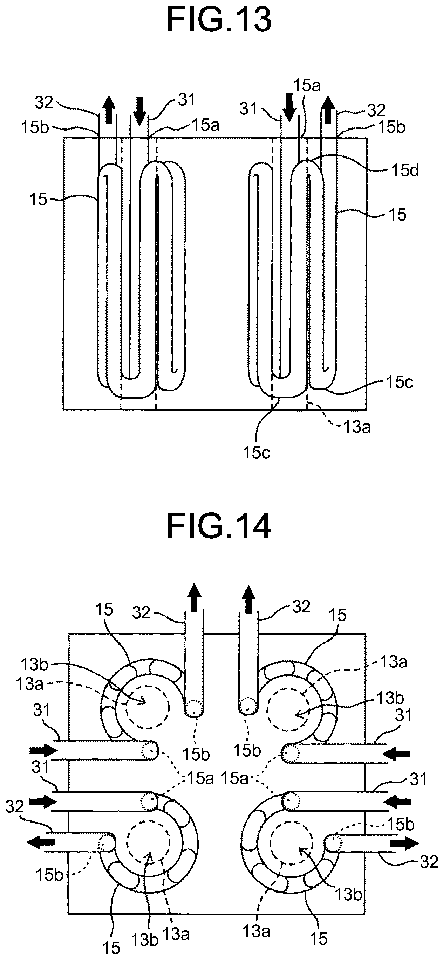

FIG. 13 is a schematic for explaining the internal structure of the cooling unit 13 according to the modification 2, viewed from the horizontal direction.

FIG. 14 is a schematic for explaining the internal structure of the cooling unit 13 according to the modification 2, in a top view from the vertical direction.

In the modification 2, too, the coolant path 15 is formed in such a manner that each of the through holes 13a is surrounded by the coolant path 15 that meanders along the circumferential direction of the through hole 13a, in the same manner as that in the modification 1 described above. However, a transfer tube 31 and a return tube 32 are connected to each of the four coolant paths 15 corresponding to the through holes 13a. In the modification 2 as well, the coolant paths 15 formed inside the cooling unit 13 can be formed more easily, compared with the spiral-shaped counterpart according to the embodiment described above, and the coolant paths 15 can be formed inside the cooling unit 13 using relatively easy processing, in the same manner as that in the modification 1 described above.

### Modification 3

Still another modification (hereinafter, the modification will be referred to as a "modification 3") of the embodiment will now be explained.

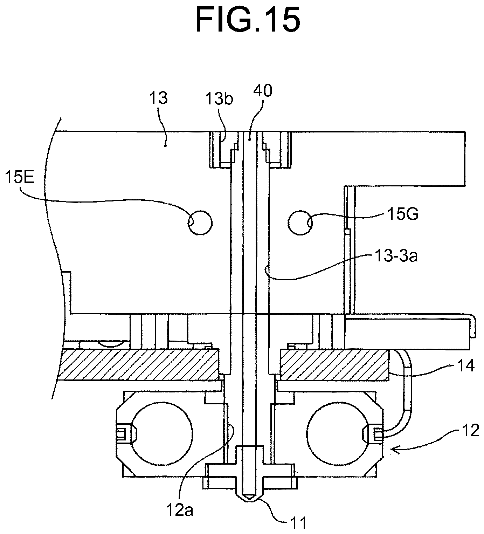

FIG. 15 is a partial cross-sectional view of the modeling head 10 corresponding to one of the injection nozzles 11 in the modification 3.

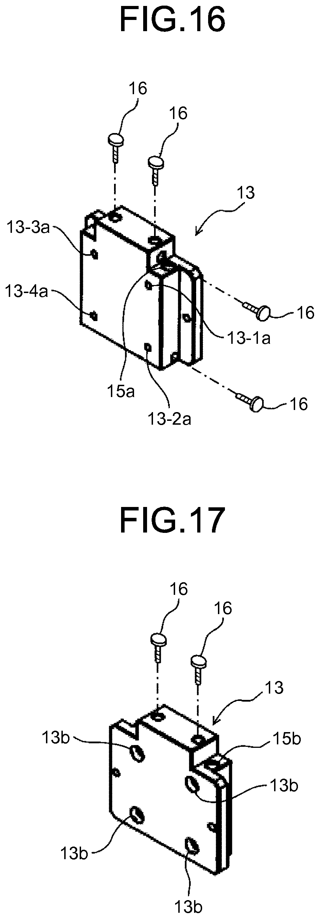

FIG. 16 is a perspective view of the cooling unit 13 according to the modification 3, viewed from the bottom side thereof (from the side of the injection nozzles 11).

FIG. 17 is a perspective view of the cooling unit 13 according to the modification 3, viewed from the top side thereof (from the opposite side of the injection nozzles 11).

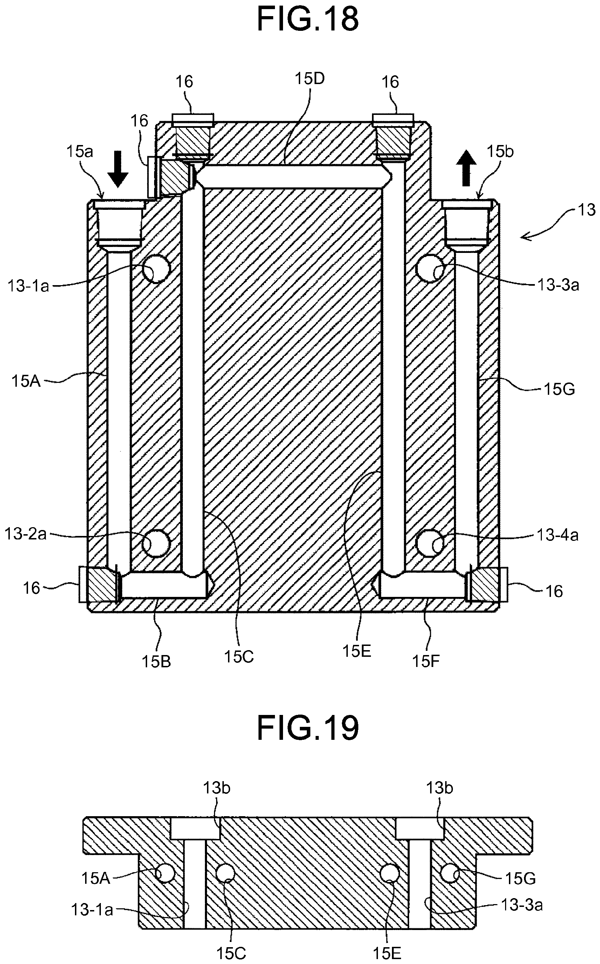

FIG. 18 is a horizontal cross-sectional view of the cooling unit 13 according to the modification 3, horizontally cut across coolant paths 15A to 15G.

FIG. 19 is a vertical cross-sectional view of the cooling unit 13 according to the modification 3, vertically cut across the through holes 13-la, 13-3a.

To simplify the production, the cooling unit 13 according to the modification 3 has a simplified structure. Specifically, coolant paths 15A to 15G, which are formed inside the cooling unit 13 according to the modification 3, are provided meandering on the same plane (horizontal surface), in such a manner to pass near the through holes 13-1a, 13-2a, 13-3a, and 13-4a corresponding to the respective injection nozzles 11, as illustrated in FIG. 18. Specifically, the coolant paths 15A to 15G according to the modification 3 extend from the coolant inlet 15a provided on a side surface of the cooling unit 13, pass beside the through hole 13-1a, extend in the horizontal direction (downwardly in FIG. 18), turn back 180 degrees in a manner to go around the through hole 13-2a, extend in the horizontal direction (upwardly in the FIG. 18) passing beside the through hole 13-1a again, are bent by 90 degrees and extend toward the side of the through hole 13-3a, are bent by 90 degrees again, extend in the horizontal direction (downwardly in FIG. 18) passing beside the through hole 13-3a, turn back by 180 degrees in a manner to go around the through hole 13-4a, extend in the horizontal direction (upwardly in FIG. 18) passing beside the through hole 13-3a again, and continue to the coolant outlet 15b.

The cooling unit 13 having a structure according to the modification 3 can be achieved by forming the coolant paths using a more simplified processing of boring holes using a drill or the like from the side surfaces of the cooling unit 13 to form the coolant paths 15A to 15G, and sealing the unnecessary opening with sealed screws 16, excluding the openings serving as the coolant inlet 15a and the coolant outlet 15b, for example.

Furthermore, the height of the cooling unit 13 according to the modification 3 can be reduced compared with the heights of counterparts according to the embodiment, the modification 1, and the modification 2, because the coolant paths 15A to 15G are formed in a meandering manner on the same plane (horizontal surface), as described above. In this manner, the volume of the cooling unit 13 can be reduced, so that the cooling unit 13 can be reduced in weight, and that a weight reduction in the entire modeling head 10 can be achieved.

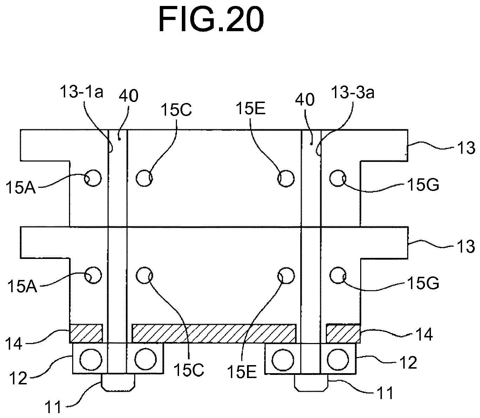

The cooling unit 13 according to the modification 3 has a smaller cooling capacity compared with that achieved by the counterparts according to the embodiment, the modification 1, and the modification 2 described above, because the total area on which the through holes 13-la, 13-2a, 13-3a, 13-4a come near the coolant paths 15A to 15G is small. However, the cooling capacity can be increased by stacking the cooling unit 13 according to the modification 3 in a plurality of strata in the height direction, as illustrated in FIG. 20. In other words, with the cooling unit 13 according to the modification 3, the number of the cooling units 13 to be stacked can be increased or decreased, depending on the cooling capacity required. As a result, when the required cooling capacity is small, the number of cooling units 13 to be stacked can be reduced, so that the weight of the modeling head 10 can be reduced. When the required cooling capacity is greater, the number of cooling units 13 to be stacked can be increased to ensure a sufficient cooling capacity.

Those explained above are merely some examples, and the advantageous effects unique to each of the following aspects can be provided.

### (Aspect A)

A three-dimensional modeling apparatus 1 that models a three-dimensional model with a modeling material discharged into a processing space, such as the chamber 3, by a discharging unit, using a modeling material discharging member, such as the modeling head 10. The modeling material discharging member includes the entrance 13b from which the modeling material, examples of which are filament 40 and a support material, is loaded, the discharging unit, such as the injection nozzles 11, that discharges the modeling material, a transport channel, such as the through holes 12a, 13a, through which the modeling material loaded from the entrance 13b is transported to the discharging unit, a heating unit, such as the head heating unit 12, that heats the modeling material in the transport channel. The modeling material discharging member includes the cooling unit 13 that is provided adjacently to the transport channel between the entrance 13b and the head heating unit 12 (the through hole 13a). The coolant path 15 is formed inside the cooling unit 13. The three-dimensional modeling apparatus 1 further includes a coolant supplying unit, such as the head cooling device 30, that supplies coolant, such as cooling water, into the coolant path 15.

In the modeling material discharging member according to this aspect, the cooling unit 13 is provided adjacently to the transport channel between the entrance 13b and the head heating unit 12. Therefore, it is possible to inhibit the heating range of the modeling material by the head heating unit 12 from extending upstream of the modeling material transport direction. However, if an air cooling system, in which the air is blown against the cooling unit 13 from the outside, is to be used as the technique for cooling the cooling unit 13 having absorbed the heat from the modeling material in the transport channel, the cooling efficiency may be insufficient. This is because, although the air cooling system can lower the temperature of the external surface of the cooling unit 13, the air cooling system is not quite capable of lowering the temperature of the part that is adjacent to the transport channel through which the modeling material is passed, and therefore, not quite capable of cooling the modeling material sufficiently.

According to this aspect, a coolant system is used that includes the coolant path 15 formed inside the cooling unit 13, and the coolant supplying unit that supplies a coolant into the coolant path 15, and the modeling material is cooled thereby. With this, the coolant path 15 can be formed in a manner to pass near the part that is adjacent to the transport channel, so that the temperature of the part that is adjacent to the transport channel can be lowered, and the modeling material passing through the transport channel can be cooled sufficiently. In this manner, the modeling material in the transport channel between the entrance 13b and the head heating unit 12 can be cooled effectively. Therefore, it is possible to inhibit the heating range of the modeling material by the head heating unit 12 from extending upstream of the modeling material transport direction.

### (Aspect B)

In the three-dimensional modeling apparatus according to aspect A, the cooling unit 13 is made of a heat-conductive material.

According to this aspect, the heat of the modeling material in the transport channel can be transferred effectively to the coolant in the coolant path 15, via the heat-conductive material of the cooling unit 13.

### (Aspect C)

In the three-dimensional modeling apparatus according to aspect A or B, the modeling material discharging member is provided in plurality. The entrance 13b, the discharging unit, and the transport channel are included in each of the modeling material discharging members, but the cooling unit 13 is shared among the modeling material discharging members.

According to this aspect, a structure including a plurality of modeling material discharging members can be simplified, compared with when a separate cooling unit 13 is provided to each of the modeling material discharging members.

### (Aspect D)

In the three-dimensional modeling apparatus according to any one of aspects A to C, the modeling material discharging member is provided in plurality. Each of the modeling material discharging members includes the entrance 13b, the discharging unit, and the transport channel. The coolant inlet 15a and the coolant outlet 15b are shared among the coolant paths 15 which are provided inside the cooling unit 13 and respectively provided adjacently to the transport channels in the modeling material discharging members.

According to this aspect, a structure including a plurality of modeling material discharging members can be simplified, compared with a structure in which the coolant inlet 15a and the coolant outlet 15b of the coolant path 15 are provided separately to each of the modeling material discharging members.

### (Aspect E)

In the three-dimensional modeling apparatus according to any of aspects A to D, the coolant is a liquid such as cooling water.

According to this aspect, it is possible to use a coolant system that uses a liquid coolant.

### (Aspect F)

In the three-dimensional modeling apparatus according to any one of aspects A to E, the coolant supplying unit includes a coolant circulating unit that circulates the coolant so as to pass through the coolant path 15.

According to this aspect, a structure with no discharge of the coolant can be achieved.

### (Aspect G)

The three-dimensional modeling apparatus according to any one of aspect A to F further includes a processing space heating unit, such as the chamber heater 7, that heats the processing space. The cooling unit 13 includes a coolant inlet 15a through which the coolant enters the coolant path 15, and a coolant outlet 15b through which the coolant is discharged from the coolant path 15. The coolant inlet 15a and the coolant outlet 15b are positioned outside of the processing space.

According to this aspect, it is possible to achieve a configuration in which the coolant conveying members, such as the transfer tube 31 and the return tube 32, that are connected to the coolant inlet 15a and the coolant outlet 15b are not positioned inside the processing space that is heated to a high temperature. As a result, because the coolant conveying members are not required to have a high heat resistance, the coolant conveying members can be manufactured using a low heat-resistant material.

### (Aspect H)

In the three-dimensional modeling apparatus according to aspect G, the three-dimensional modeling apparatus also includes a moving unit, such as the X-axis driving mechanism 21 and the Y-axis driving mechanism 22, that moves the modeling material discharging member.

In a structure in which the modeling material discharging member moves, as specified in this aspect, it is preferable for the coolant conveying members connected to the coolant path 15 in the cooling unit 13, included in the modeling material discharging member, to be made of a flexible material so that the movement of the modeling material discharging member is not obstructed thereby. In this aspect, because the coolant conveying members can be made of a low heat-resistant material, as described above, the coolant conveying members can be easily manufactured with a flexible material.

### (Aspect I)

A modeling material discharging member, such as the modeling head 10, includes the entrance 13b from which a modeling material, such as the filament 40 and a support material, is loaded, a discharging unit, such as the injection nozzles 11, that discharges the modeling material, a transport channel, such as the through holes 12a, 13a, through which the modeling material loaded from the entrance 13b is transported to the discharging unit, and the head heating unit 12 that heats the modeling material in the transport channel. The modeling material discharging member includes the cooling unit 13 that is provided adjacently to the transport channel (the through hole 13a) positioned between the entrance 13b and the head heating unit 12. The coolant path 15 is formed inside the cooling unit 13.

According to this aspect, it is possible to inhibit the heating range of the modeling material by the head heating unit 12 from extending upstream of the modeling material transport direction.

### Reference Signs List

1 three-dimensional modeling apparatus
2 main body frame
3 chamber
4 stage
6 filament supplying unit
7 chamber heater
10 modeling head
11 injection nozzle
12 head heating unit
13 cooling unit
12a, 13a through hole
13b entrance
14 heat-insulating portion
15 coolant path
15a coolant inlet
15b coolant outlet
15c lower turning point
15d upper turning point
21 X-axis driving mechanism
22 Y-axis driving mechanism
23 Z-axis driving mechanism
30 head cooling device
31 transfer tube
32 return tube
33 coupler
34 connecting passageway
40, 40' filament
100 control unit

### Citation List

### Patent Literature

Patent Literature 1: Japanese Patent No. 3995933

## Claims

1. A three-dimensional modeling apparatus that models a three-dimensional model with a modeling material discharged into a processing space by a discharging unit, using a modeling material discharging member that comprises:
an entrance from which the modeling material is loaded,
the discharging unit that discharges the modeling material,
a transport channel through which the modeling material loaded from the entrance is transported to the discharging unit, and
a heating unit that heats the modeling material in the transport channel, wherein
the modeling material discharging member comprises a cooling unit that is provided adjacently to the transport channel between the entrance and the heating unit,
a coolant path is formed inside of the cooling unit, and
the three-dimensional modeling apparatus further comprises a coolant supplying unit that supplies coolant into the coolant path.

2. The three-dimensional modeling apparatus according to claim 1, wherein the cooling unit is made of a heat-conductive material.

3. The three-dimensional modeling apparatus according to claim 1 or 2, wherein the modeling material discharging member is provided in plurality, in which the entrance, the discharging unit, and the transport channel are included in each of the modeling material discharging members, but the cooling unit is shared among the modeling material discharging members.

4. The three-dimensional modeling apparatus according to any one of claims 1 to 3, wherein
the modeling material discharging member is provided in plurality, each of the modeling material discharging members including the entrance, the discharging unit, and the transport channel, and
a coolant inlet and a coolant outlet are shared among a plurality of coolant paths, which are provided inside the cooling unit and respectively provided adjacently to the transport channels in the modeling material discharging members.

5. The three-dimensional modeling apparatus according to any one of claims 1 to 4, wherein the coolant is a liquid.

6. The three-dimensional modeling apparatus according to any one of claims 1 to 5, wherein the coolant supplying unit includes a coolant circulating unit that circulates the coolant so as to pass through the coolant path.

7. The three-dimensional modeling apparatus according to any one of claims 1 to 6, further comprising a processing space heating unit that heats the processing space, wherein
the cooling unit is configured in such a manner that a coolant inlet through which the coolant enters the coolant path and a coolant outlet through which the coolant is discharged from the coolant path are positioned outside the processing space.

8. The three-dimensional modeling apparatus according to claim 7, further comprising a moving unit that moves the modeling material discharging member.

9. A modeling material discharging member comprising:
an entrance from which a modeling material is loaded,
a discharging unit that discharges the modeling material,
a transport channel through which the modeling material loaded from the entrance is transported to the discharging unit, and
a heating unit that heats the modeling material in the transport channel,
the modeling material discharging member further comprising a cooling unit that is provided adjacently to the transport channel between the entrance and the heating unit, wherein
a coolant path is formed inside the cooling unit.
